# EUROPÄISCHE PATENTANMELDUNG

(11) **EP 3 795 949 A1**
(43) Veröffentlichungstag der Anmeldung: **24.03.2021**
(21) Anmeldenummer: 20191461.1
(22) Anmeldetag: 18.08.2020
(51) Int. Cl.: G01C 21/20, G01C 21/16, G01C 21/00, G01C 7/04, B66F 9/06, G05B 19/418, G05D 1/02, G06K 9/00, B60W 30/10, G01S 17/89, G01S 13/89, G06Q 10/08

(54) **VERFAHREN ZUM ERSTELLEN EINER KARTE, VERFAHREN ZUM ERMITTELN EINER POSE EINES FAHRZEUGS, KARTIERUNGSVORRICHTUNGEN UND LOKALISIERUNGSVORRICHTUNGEN**

(30) Priorität: 04.09.2019 DE 102019123659
(71) Anmelder: SICK AG, 79183 Waldkirch (DE)
(72) Erfinder: STEDER, Bastian, 79112 Freiburg (DE); FISCHER, Fabian, 79183 Waldkirch (DE); SCHOPP, Patrick, 79112 Freiburg (DE); HANSEN, Christoph, 20535 Hamburg (DE)
(74) Vertreter: Manitz Finsterwald Patent- und Rechtsanwaltspartnerschaft mbB

(57) **Zusammenfassung**

Die Erfindung betrifft ein Verfahren zum Erstellen einer Karte eines Navigationsbereichs eines Fahrzeugs, das Verfahren aufweisend:
Abfahren einer durch eine im Navigationsbereich vorhandene Spurführungsmarkierung vorgegebenen Bahn mit dem Fahrzeug; Ermitteln von Abständen des Fahrzeugs von gegebenenfalls in einer Umgebung der Bahn vorhandenen Objekten; und Erstellen der Karte basierend auf der Spurführungsmarkierung und den Abständen.

Die Erfindung betrifft ferner ein Verfahren zum Ermitteln einer Pose eines Fahrzeugs in einem Navigationsbereich, das Verfahren aufweisend:
Ermitteln einer Lage des Fahrzeugs relativ zu einer im Navigationsbereich vorhandenen Spurführungsmarkierung; Ermitteln von Abständen des Fahrzeugs von gegebenenfalls in einer Umgebung des Fahrzeugs vorhandenen Objekten; und
Ermitteln der Pose basierend auf der Lage, den Abständen und einer Karte, wobei die Karte Positionsinformationen von im Navigationsbereich vorhandenen Objekten und Spurführungsmarkierungen aufweist.

Die Erfindung betrifft ferner eine entsprechende Kartierungsvorrichtung und eine entsprechende Lokalisierungsvorrichtung.

## Beschreibung

Die vorliegende Erfindung betrifft Verfahren zum Erstellen einer Karte, Verfahren zum Ermitteln einer Pose eines Fahrzeugs, Kartierungsvorrichtungen und Lokalisierungsvorrichtungen.

Konventionell navigieren fahrerlose Transportfahrzeuge (FTF) (engl.: Automated Guided Vehicle (AGV)) meist mittels Spurführung. Dabei wird eine kontinuierliche Spur (in anderen Worten: Leitlinie, beispielsweise ein optisch auslesbares oder magnetisches Band) auf den Boden geklebt oder in den Boden eingelassen und mittels geeigneter Sensorik (beispielsweise einer Kamera oder einem Hall-Sensor) detektiert. Die Spurführungssensoren geben z.B. den Abstand zum Mittelpunkt der Spur aus. Mit dieser Information kann die Fahrt des FTF derart geregelt werden, dass das FTF der kontinuierlichen Leitlinie folgt. Dabei werden insbesondere keine absolute Lokalisierung und keine Pfadplanung für das FTF benötigt.

Zusätzlich werden bei der Spurführung Markierungen benutzt, um Steuersignale, wie z.B. "langsam fahren" oder "rechts abbiegen", an das FTF zu übermitteln bzw. zu senden. Diese Markierungen sind meistens Codes, beispielsweise Zahlen oder Ziffernfolgen, die entweder optisch, beispielsweise in der Form von Barcodes, oder per Nahfeld-Funktechnik, beispielsweise in der Form von RFID-Tags (radiofrequency identification tags), übertragen werden, wenn das FTF bzw. ein am FTF angebrachter Code-Sensor die Markierung überfährt. Dazu werden diese Markierungen entlang der Fahrspur auf den Boden geklebt oder in den Boden eingelassen.

In den Boden eingelassene Spuren sind wenig flexibel. Die Fahrtwege der FTF zu verändern ist nur mit großem Aufwand möglich. In modernen Produktionsumgebungen kommen sie daher immer seltener zum Einsatz.

Aufgeklebte Spuren bieten die größere Flexibilität. Sie können ohne umfangreiche Modifikationen der Anlage installiert werden. Allerdings sind die Spuren einer hohen Belastung während des Betriebs der Anlage ausgesetzt. Aufgeklebte Codes sind anfällig für Verschleiß und Abrieb durch produktionsbedingten Verkehr. Gabelstapler oder Routenzüge fahren regelmäßig über die Spuren. Das kann zu Defekten der Spur führen, die zur Folge haben, dass Fahrzeuge, die auf eine bestimmte Spur angewiesen sind, nicht weiterfahren können. Die Defekte der Spur müssen dann durch Servicepersonal behoben werden, um einen Stillstand der Anlage zur verhindern. Weiterhin kommt es häufig vor, dass die zur Steuerung des FTF benötigten Markierungen durch Abrieb oder Verschmutzung defekt sind.

Alternativ können FTF mittels Laser-Lokalisierung anstelle von Spurführung gesteuert werden. Das Laser-Lokalisierungssystem gibt dabei die absolute Position des Fahrzeuges als Messwert aus. Das FTF muss dann mittels Pfadplanung selbständig den Weg von seiner derzeitigen Position zum Ziel (oder zu einer Reihe von Zwischenzielen, also entlang eines vorgegebenen Pfades) planen und mit der absoluten Positionsmessung regeln. Das ist weitaus komplexer und aufwändiger als das oben genannte Verfahren zur Spurführung. Bei Störungen der Pfadplanung ist der Einsatz von geschultem Fachpersonal notwendig.

Auch für die Inbetriebnahme einer Lasernavigation ist geschultes Fachpersonal notwendig. Insbesondere muss dabei die Umgebung der Anlage kartiert werden.

Es ist Aufgabe der Erfindung, ein verbessertes und verlässliches Navigationssystem bereitzustellen, das eine Steuerung des FTF erlaubt, die so einfach wie die einer Spurführung ist, sowohl was den Betrieb, als auch die Inbetriebnahme angeht, und das kompatibel zu bestehenden Spurführungssteuerungen ist.

Die Lösung der Aufgabe erfolgt durch ein Verfahren zum Erstellen einer Karte eines Navigationsbereichs eines Fahrzeugs mit den Merkmalen des Anspruchs 1, ein Verfahren zum Ermitteln einer Pose eines Fahrzeugs in einem Navigationsbereich mit den Merkmalen des Anspruchs 11, eine Kartierungsvorrichtung mit den Merkmalen des Anspruchs 13 und eine Lokalisierungsvorrichtung mit den Merkmalen des Anspruchs 14.

Ein erfindungsgemäßes Verfahren zum Erstellen einer Karte eines Navigationsbereichs eines Fahrzeugs umfasst die Schritte:
- Abfahren einer durch eine im Navigationsbereich vorhandene Spurführungsmarkierung vorgegebenen Bahn mit dem Fahrzeug;
- Ermitteln von Abständen des Fahrzeugs von gegebenenfalls in einer Umgebung der Bahn vorhandenen Objekten; und
- Erstellen der Karte basierend auf der Spurführungsmarkierung und den Abständen.

In anderen Worten wird basierend darauf, dass das Fahrzeug einer durch eine Spurführungsmarkierung vorgegebenen Bahn folgt und währenddessen Abstandsinformationen aufzeichnet, eine Karte erstellt. Neben den Abstandsinformationen kann die Karte auch Informationen über die Spurführungsmarkierung enthalten. Die Spurführungsmarkierung kann also nicht nur zur Führung des Fahrzeugs während der Kartenaufzeichnung verwendet werden, sondern kann auch Bestandteil der Karte sein.

Durch das Verfahren wird vorteilhafterweise ermöglicht, eine Karte zu erstellen, ohne dass dafür eine externe Vorrichtung (weder externe Sensoren außerhalb des Fahrzeugs noch eine Computervorrichtung zum Aufzeichnen oder vorgeben der abzufahrenden Bahn) nötig ist.

Ferner ist die Karte durch die Verwendung sowohl der Abstandsinformationen als auch der Spurführungsmarkierung robust gegenüber Ausfall einer der Informationen. Insbesondere kann die Karte verwendet werden selbst wenn die Spurführungsmarkierung nach Erstellung der Karte beschädigt oder teilweise oder vollständig entfernt wird.

Die Karte kann entweder direkt auf dem Fahrzeug erstellt werden, oder nach Übermittlung der ermittelten Messwerte (beispielsweise der ermittelten Abstände und der ermittelten Spurführungsmarkierung) an eine zentrale Vorrichtung (beispielsweise ein Computersystem) in der zentralen Vorrichtung erstellt werden. Nach dem Erstellen der Karte kann die Karte gespeichert werden, beispielsweise auf dem Fahrzeug oder auf einem Speichermedium außerhalb des Fahrzeugs. Die Karte kann dann auf dem Fahrzeug, mit dessen Hilfe sie erstellt wurde, oder einem anderen Fahrzeug verwendet werden, die Karte kann also auf ein Fahrzeug oder mehrere Fahrzeuge kopiert werden. Die zentrale Vorrichtung und/oder das Speichermedium können über eine Drahtloskommunikationsschnittstelle (beispielsweise über Funk oder eine WLAN-Schnittstelle) mit dem Fahrzeug verbunden sein.

Die Spurführungsmarkierung ist zum Vorgeben der Bahn ohne weitere Markierungen oder Navigationsvorgaben geeignet, so dass das Fahrzeug selbständig der Spurführungsmarkierung folgen kann. Die Bahn des Fahrzeugs ist also alleine durch die Spurführungsmarkierung vorgegeben. Die Spurführungsmarkierung kann auf dem Boden vorhanden sein (also auf dem Boden angebracht sein) oder in dem Boden vorhanden sein (also in den Boden eingebracht sein).

Das Verfahren kann gegebenenfalls ferner das Anbringen bzw. Einbringen der Spurführungsmarkierung vor dem Abfahren der Bahn mit dem Fahrzeug aufweisen.

Die Spurführungsmarkierung kann eine optische Spurführungsmarkierung, eine elektrische Spurführungsmarkierung, eine magnetische Spurführungsmarkierung oder eine (optisch und/oder elektrisch und/oder magnetisch) gemischte Spurführungsmarkierung sein.

Die Spurführungsmarkierung enthält eine Spur, entlang der sich das Fahrzeug bewegen soll, sowie ggf. Codes zur Steuerung des Fahrzeugs. Beispielsweise können die Codes Geschwindigkeitsvorgaben (z.B. vor oder nach Kurven oder am Ziel) oder Richtungsangaben (z.B. bei Abzweigungen) enthalten.

Während das Fahrzeug die Bahn abfährt, können die Abstände und die Spurführungsmarkierung relativ zum Fahrzeug ermittelt werden, so dass zu einer Mehrzahl von Positionen auf der Bahn ein jeweiliger Abstand und Informationen darüber ermittelt werden, ob an dieser Position eine Spurführungsmarkierung vorhanden ist.

Die Abstände können über Abstandssensoren messen (z.B. Radar, Laser/ Lidar, Infrarot, Ultraschall, Kamera, Stereo-Kamera, Time-of-Flight-Kamera (TOF-Kamera; deutsch: Laufzeitkamera) ermittelt werden. Die Spurführungsmarkierung kann über einen optischen und/oder elektrischen und/oder magnetischen Sensor, beispielsweise einen Liniensensor, der zumindest im Wesentlichen quer (z.B. zumindest im Wesentlichen senkrecht) zur gewöhnlichen Fahrtrichtung des Fahrzeugs angebracht ist, ermittelt werden.

Vorteilhafterweise umfasst das erfindungsgemäße Verfahren ferner das Ermitteln zumindest einer geschätzten Position des Fahrzeugs basierend auf einer geschätzten Eigenbewegung des Fahrzeugs. Dadurch wird es möglich, eine Karte zu erstellen, an der für verschiedene Positionen in der Karte Informationen darüber gespeichert sind, ob sich an dieser Position ein Objekt befindet (dies wird durch die Ermittlung der Abstände gewährleistet) und ob sich an dieser Position eine Spurführungsmarkierung befindet (dies wird durch die Erkennung der Spurführungsmarkierung gewährleistet).

Die Erkennung der Spurführungsmarkierung ist für das Abfahren der durch die Spurführungsmarkierung vorgegebenen Bahn nötig, jedoch kann die Spurführungsmarkierung bei Kenntnis der geschätzten Position des Fahrzeugs ebenfalls in die Karte eingetragen werden (also kartiert werden).

Insbesondere kann die Eigenbewegung basierend auf den Abständen und/oder basierend auf Messungen einer Geschwindigkeit mindestens eines Rades des Fahrzeugs geschätzt werden. Dabei kann unter Kenntnis einer aktuellen Position des Fahrzeugs eine nächste Position des Fahrzeugs basierend auf einer Änderung der Abstände geschätzt werden. Ferner kann durch Kenntnis der Geschwindigkeit (beispielsweise Rotationsgeschwindigkeit) der Räder und der Durchmesser der Räder unter der Annahme eines bekannten Schlupfs der Räder die Absolutgeschwindigkeit des Fahrzeugs geschätzt werden, und basierend darauf kann eine geschätzte Positionsänderung ermittelt werden.

Damit kann dann vorteilhafterweise die Karte auf der geschätzten Position basieren. Es kann also zu einer Mehrzahl von geschätzten Positionen in der Karte eingetragen werden, ob sich relativ zu der geschätzten Position in einem Abstand ein Objekt befindet oder ob sich an der geschätzten Position eine Spurführungsmarkierung befindet.

Die in der Karte eingetragenen Objekte und die in der Karte eingetragene Spurführungsmarkierung (bestehend aus Bahn und ggf. Codes) können später zur Lokalisierung des Fahrzeugs im Navigationsbereich verwendet werden. Ferner kann die Information über die Spurführungsmarkierung zur Bahnvorgabe des Fahrzeugs verwendet werden. Die Spurführungsmarkierung in der Karte kann also zweierlei Funktionen haben: die Spurführungsmarkierung kann zur Lokalisierung verwendet werden, und die Spurführungsmarkierung kann zur Bahnvorgabe verwendet werden.

Die Karte weist also für eine Mehrzahl von geschätzten Positionen Positionsinformation über Objekte in einer Umgebung der geschätzten Position und Information über eine an der geschätzten Position vorhandene Spurführungsmarkierung auf.

Gemäß einer vorteilhaften Ausgestaltung des Verfahrens kann das Verfahren ferner umfassen: Ermitteln, ob eine aktuelle tatsächliche Position des Fahrzeugs entlang der Bahn einer bereits zuvor angefahrenen tatsächlichen Position des Fahrzeugs entspricht; und falls ermittelt wird, dass die aktuelle tatsächliche Position der bereits zuvor angefahrenen tatsächlichen Position entspricht, Durchführen einer Korrektur der Karte zum Zusammenführen der an der aktuellen tatsächlichen Position des Fahrzeugs ermittelten geschätzten Position und der an der bereits zuvor angefahrenen tatsächlichen Position des Fahrzeugs ermittelten geschätzten Position. Zusammen mit der an der aktuellen tatsächlichen Position des Fahrzeugs ermittelten geschätzten Position und der an der bereits zuvor angefahrenen tatsächlichen Position des Fahrzeugs ermittelten geschätzten Position können auch die jeweiligen Messwerte (also die Abstände und Spurführungsmarkierung, die an der aktuellen tatsächlichen Position ermittelt werden, und die Abstände und Spurführungsmarkierung, die an der bereits zuvor angefahrenen tatsächlichen Position ermittelten wurden) zusammengeführt werden.

Dadurch ist es vorteilhafterweise möglich, die Datenmenge (also die Größe) der Karte gering zu halten, da nicht die tatsächlich einmal vorhandenen Objekte und Spurführungsmarkierungen doppelt oder mehrfach gespeichert werden müssen.

Ferner können Messfehler in den Abstands- und Spurführungsmarkierungsdaten minimiert oder ausgemittelt werden. Zusätzlich führt eine eindeutige Karte, in der reale Objekte nicht mehrfach enthalten sind, zu besseren Lokalisierungsergebnissen.

Insbesondere kann das Ermitteln, ob die tatsächliche aktuelle Position des Fahrzeugs entlang der Bahn der bereits zuvor angefahrenen tatsächlichen Position des Fahrzeugs entspricht, auf der Spurfolgemarkierung basieren und/oder auf den Abständen basieren und/oder auf der geschätzten Eigenbewegung des Fahrzeugs und/oder geschätzten Position des Fahrzeugs basieren.

Die Korrektur kann z.B. basierend auf einem Graph-Optimierungs-Verfahren durchgeführt werden. In dem Graph-Optimierungsverfahren können Knoten des Graphen den Positionen des Fahrzeugs entlang der vorgegebenen Bahn und Kanten des Graphen den Abständen und der Spurführungsmarkierung entsprechen. Beispielsweise kann das Graph-Optimierungs-Framework g²o verwendet werden.

Die Spurführungsmarkierung kann eindeutige Codes mit bekannter eindeutiger Position in dem Navigationsbereich umfassen. Diese können vorteilhafterweise als verlässliche Indikatoren beim Ermitteln verwendet werden, ob eine aktuelle tatsächliche Position des Fahrzeugs entlang der Bahn einer bereits zuvor angefahrenen tatsächlichen Position des Fahrzeugs entspricht.

Das Personal, das die Fahrtwege der FTF einlernt, muss bei dem erfindungsgemäßen Kartierungsverfahren (also dem erfindungsgemäßen Verfahren zum Erstellen einer Karte) nicht über das normale Verlegen der Spur hinaus geschult werden. Insbesondere sind keine Arbeiten an einem PC und somit auch keine EDV-Kenntnisse notwendig. Die Karten können vollautomatisiert generiert werden und benötigen kein speziell geschultes Personal. Der Fahrparcours muss z.B. lediglich einmal geklebt werden, wie es bei einer normalen Inbetriebnahme auch stattfindet.

Es ist nicht notwendig, eine kontinuierliche Pfadplanung durchzuführen, wie es sonst z.B. bei Laser-Lokalisierung üblich ist. Der Kartierungsprozess (einschließlich des Erstellens der Karte und des gewünschten Pfades) erfolgt automatisiert nach einmaligem Abfahren des Parcours mit dem FTF. Im Unterschied zu einer konventionellen Kartierung, die ausschließlich Laserscanner verwendet, ist dabei kein besonderes Fachwissen zur Einrichtung des Systems von Nöten.

Die Aufgabe der Erfindung wird ferner durch ein Verfahren zum Ermitteln einer Pose eines Fahrzeugs in einem Navigationsbereich mit den folgenden Schritten gelöst:
- Ermitteln einer Lage des Fahrzeugs relativ zu einer im Navigationsbereich vorhandenen Spurführungsmarkierung;
- Ermitteln von Abständen des Fahrzeugs von gegebenenfalls in einer Umgebung des Fahrzeugs vorhandenen Objekten; und
- Ermitteln der Pose basierend auf der Lage, den Abständen und einer Karte, wobei die Karte Positionsinformationen von im Navigationsbereich vorhandenen Objekten und Spurführungsmarkierungen aufweist.

Vorteile, Details und bevorzugte Ausgestaltungen, die für das Verfahren zur Erstellung der Karte beschrieben sind, gelten auch für das Verfahren zur Ermittlung der Pose, und umgekehrt.

Die Pose des Fahrzeugs kann die Position des Fahrzeugs (als zweidimensionale Position oder als dreidimensionale Position) und/oder die Orientierung des Fahrzeugs (als einen Winkel, als zwei Winkel, oder als drei Winkel) enthalten. Die Pose kann absolut oder relativ sein, zum Beispiel relativ zum Startpunkt einer Bahn des Fahrzeugs.

Die ermittelte Pose kann dann zur Steuerung des Fahrzeugs verwendet werden.

Die Karte kann gemäß dem oben beschriebenen Verfahren zur Erstellung der Karte erstellt worden sein. Die Pose kann basierend auf einem Vergleich mit der Karte ermittelt werden.

Bei einer bevorzugten Ausgestaltung wird die Pose basierend auf einem Kalman-Filter-Verfahren ermittelt. In dem Kalman-Filter-Verfahren wird eine Position eines Keyframes geschätzt.

Als Keyframe wird dabei Abstandsinformation bezeichnet, die an einem bestimmten Ort, an dem sich das Fahrzeug während seiner Fahrt befunden hat, ermittelt wurde. Die als Keyframe gespeicherte Abstandsinformation kann dann mit einer im weiteren Verlauf der Fahrt des Fahrzeugs ermittelten Abstandsinformation verglichen werden, und so kann eine Eigenbewegung des Fahrzeugs geschätzt werden.

Die Aufgabe der Erfindung wird ferner durch eine Kartierungsvorrichtung gelöst, die folgendes umfasst:
- eine Antriebsschnittstelle, eingerichtet zum Steuern eines Antriebs eines Fahrzeugs;
- eine Abstandssensorschnittstelle, eingerichtet zum Empfangen eines mittels eines Abstandssensors ermittelten Abstands des Abstandssensors von gegebenenfalls in einer Umgebung des Abstandssensors vorhandenen Objekten;
- eine Spurfolgesensorschnittstelle, eingerichtet zum Empfangen einer mittels eines Spurfolgesensors ermittelten Lage des Spurfolgesensors relativ zu einer in einem Navigationsbereich vorhandenen Spurführungsmarkierung; und
- einen Steuerungsschaltkreis eingerichtet zum:
- Ansteuern des Antriebs über die Antriebsschnittstelle so, dass das Fahrzeug einer durch die Spurführungsmarkierung vorgegebenen Bahn folgt;
- Ermitteln von Abständen von gegebenenfalls in einer Umgebung des Abstandssensors vorhandenen Objekten entlang der Bahn; und
- Erstellen einer Karte des Navigationsbereichs basierend auf der Spurführungsmarkierung und den Abständen.

Die Abstandssensorschnittstelle stellt dabei eine Schnittstelle zu dem Abstandssensor bereit, der in dem Fahrzeug angeordnet sein kann. Das über die Abstandssensorschnittstelle übertragene Signal repräsentiert den Abstand. Beispielsweise kann das Signal ein analoges Signal sein, beispielsweise eine Spannung, deren Höhe einen Abstand repräsentiert. Alternativ kann das Signal ein digitales Signal sein, wobei der Abstand in eine binäre Folge von Bits codiert ist.

Die Spurfolgesensorschnittstelle stellt eine Schnittstelle zum Spurfolgesensor bereit, der in dem Fahrzeug angeordnet sein kann. Das über die Spurfolgesensorschnittstelle übertragene Signal repräsentiert die Lage. Beispielsweise kann das Signal ein analoges Signal sein, beispielsweise eine Spannung, deren Höhe eine Lage repräsentiert. Alternativ kann das Signal ein digitales Signal sein, wobei die Lage in eine binäre Folge von Bits codiert ist.

Die Abstandssensorschnittstelle und/oder die Spurfolgesensorschnittstelle können externe Schnittstellen mit Verbindung zur Kartierungsvorrichtung sein und eine elektrische und mechanische Verbindung, beispielsweise über einen Stecker und eine Buchse, bereitstellen. Alternativ können die Abstandssensorschnittstelle und/oder die Spurfolgesensorschnittstelle interne Schnittstellen sein (beispielsweise ein fester Kontakt, eine fest verbundene Leitung, oder ein fest verbundenes Kabel), falls die Kartierungsvorrichtung den Abstandssensor und/oder Spurfolgesensor enthält.

Die Kartierungsvorrichtung und/oder der Antrieb und/oder Abstandssensor und/oder der Spurfolgesensor können ein Teil des Fahrzeugs sein, oder können in einer zentralen Einheit bereitgestellt sein, die beispielsweise über eine Drahtloskommunikationsschnittstelle mit der Kartierungsvorrichtung verbundenen ist.

Der Antrieb kann ein Rad oder mehrere Räder des Fahrzeugs und/oder eine Lenkung des Fahrzeugs beinhalten. Ein Lenken des Fahrzeugs kann durch das Einlenken von einem Rad oder mehreren Rädern des Fahrzeugs, oder über eine Differenzgeschwindigkeit von angetriebenen Rädern, bewirkt werden.

Der Antrieb kann basierend auf über die Spurfolgesensorschnittstelle empfangenen Daten angesteuert werden. Die Kartierung kann basierend auf über die Spurfolgesensorschnittstelle und/oder über die Abstandssensorschnittstelle empfangenen Daten erfolgen.

Die Aufgabe der Erfindung wird ferner gelöst durch eine Lokalisierungsvorrichtung, umfassend:
- eine Abstandssensorschnittstelle, eingerichtet zum Empfangen eines mittels eines Abstandssensors eines Fahrzeugs ermittelten Abstands des Abstandssensors von gegebenenfalls in einer Umgebung des Abstandssensors vorhandenen Objekten;
- eine Spurfolgesensorschnittstelle, eingerichtet zum Empfangen einer mittels eines Spurfolgesensors des Fahrzeugs ermittelten Lage des Spurfolgesensors relativ zu einer in einem Navigationsbereich vorhandenen Spurführungsmarkierung; und
- einen Steuerungsschaltkreis eingerichtet zum:
- Ermitteln einer Lage des Fahrzeugs (relativ zu der vorhandenen Spurführungsmarkierung);
- Ermitteln von Abständen des Fahrzeugs von gegebenenfalls in einer Umgebung des Fahrzeugs vorhandenen Objekten; und
- Ermitteln einer Pose des Fahrzeugs basierend auf der Lage, den Abständen und einer Karte, wobei die Karte Positionsinformationen von im Navigationsbereich vorhandenen Objekten und Spurführungsmarkierungen aufweist.

Vorteile, Details und bevorzugte Ausgestaltungen, die für eines der oben beschriebenen Verfahren beschrieben sind, gelten auch für eine oder mehrere der Vorrichtungen, und umgekehrt.

Die Lokalisierungsvorrichtung kann ein Teil des Fahrzeugs sein (also im oder am Fahrzeug bereitgestellt werden). Eine Kartierungsvorrichtung (beispielsweise eine Kartierungsvorrichtung wie oben beschrieben) kann ebenfalls Teil des Fahrzeugs sein (also im oder am Fahrzeug bereitgestellt werden), so dass das Fahrzeug sowohl die Lokalisierungsvorrichtung als auch die Kartierungsvorrichtung enthält. Es kann also mit dem Fahrzeug, das später lokalisiert werden soll, auch die Karte erstellt werden. Dadurch kann weniger Sensorkalibrierung nötig sein, weil Sensorfehler (implizit) mitkartiert werden. Ferner kann die Karte im laufenden Betrieb aktualisiert werden, ähnlich eines SLAM-Verfahrens (Simultaneous Localization and Mapping; deutsch: Simultane Positionsbestimmung und Kartenerstellung).

Es kann eine Steuerungsvorrichtung zum Steuern des Fahrzeugs bereitgestellt sein, wobei die Steuerungsvorrichtung die Lokalisierungsvorrichtung enthält. Die Lokalisierungsvorrichtung übermittelt dann die ermittelte Pose zur Weiterverarbeitung an die Steuerungsvorrichtung, die den Antrieb, insbesondere auch die Lenkung, ansteuert.

Erfindungsgemäße Verfahren und Vorrichtungen zur Lokalisierung sind robust gegenüber Abnutzungen von Spurführungsmarkierungen, die während des Betriebs der Anlage entstehen können (beispielsweise können Spuren abreißen oder Codes unleserlich werden). Insbesondere kann bei einer defekten physikalischen Spur das FTF weiterhin einer vorgegebenen Fahrspur folgen und somit ein Unterbrechen des Warentransports verhindert werden. Zusätzlich können Steuerkommandos an das FTF ausgegeben werden, selbst wenn die physikalischen Markierungen nicht mehr vorhanden oder defekt sind. Das System kann einfach in Betrieb genommen werden. Die Inbetriebnahme basiert dabei z.B. auf der Inbetriebnahme von bisher verwendeten spurgeführten Systemen.

Insbesondere ist die Kartierung der Anlage ohne manuelle Bearbeitung der Karte durch Fachpersonal möglich. Die Karte kann direkt auch Routeninformationen enthalten.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:
- Fig. 1: ein fahrerloses Fahrzeug gemäß einer erfindungsgemäßen Ausführungsform;
- Fig. 2: eine schematische Darstellung einer Spurführung mit gleichzeitigem Auslesen des Steuercodes gemäß einer Ausführungsform;
- Fig. 3A: eine beispielhafte Karte gemäß einer Ausführungsform;
- Fig. 3B: eine Illustration eines Kartierungsfehlers;
- Fig. 4: eine schematische Darstellung von Prädiktionsschritten gemäß einer Ausführungsform;
- Fig. 5: eine schematische Darstellung von Korrekturschritten gemäß einer Ausführungsform;
- Fig. 6A: ein Flussdiagramm zur Veranschaulichung eines Verfahrens zum Erstellen einer Karte eines Navigationsbereichs eines Fahrzeugs gemäß einer Ausführungsform; und
- Fig. 6B: ein Flussdiagramm zur Veranschaulichung eines Verfahrens zum Ermitteln einer Pose eines Fahrzeugs in einem Navigationsbereich gemäß einer Ausführungsform.

Nachfolgend werden die erfindungsgemäßen Verfahren exemplarisch anhand eines Ausführungsbeispiels erläutert, wobei zunächst die mit dem Erzeugen der Karte in Zusammenhang stehenden Verfahrensschritte näher erläutert werden.

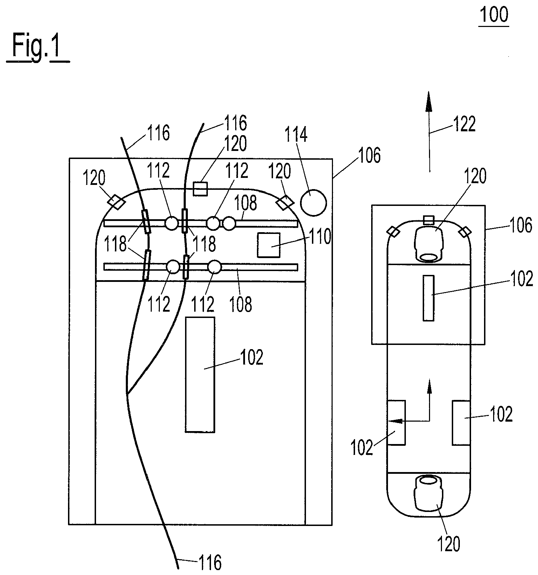

Fig. 1 zeigt ein fahrerloses Fahrzeug 100 gemäß einer erfindungsgemäßen Ausführungsform. Das Fahrzeug 100 kann beispielsweise als Kartierungsvorrichtung oder als FTF mit einer Lokalisierungsvorrichtung eingerichtet sein. Das Fahrzeug 100 umfasst einen Antrieb mit Rädern 102, wobei die Räder 102 nicht nur einen Vortrieb, sondern auch eine Lenkung ermöglichen. Dazu kann beispielsweise mindestens eines der Räder 102 lenkbar sein, oder es können die Räder 102 mit unterschiedlichen Geschwindigkeiten gedreht werden, so dass durch eine Differenzgeschwindigkeit ein Richtungswechsel des Fahrzeugs 100 bewirkt wird. Auf dem Fahrzeug 100 sind eine oder mehrere Abstandssensoren 120, beispielsweise Lidar- oder Lasersensoren, angebracht. Die gewöhnliche Fahrtrichtung des Fahrzeugs ist durch Pfeil 122 dargestellt.

Ein Ausschnitt 106 des vorderen Teils des Fahrzeugs 100 ist im linken Teil von Fig. 1 vergrößert dargestellt. Dabei sind neben Bestandteilen des Fahrzeugs 100 auch in einer Karte enthaltene Spurführungsmarkierungen 114, 116 in Form einer sich verzweigenden Spur 116 und eines neben der Spur 116 angebrachten Codes 114 dargestellt. Der Code 114 kann Steuerinformationen für das Fahrzeug 100 enthalten, beispielsweise Geschwindigkeitsvorgaben oder Richtungsvorgaben, die verwendet werden können, um das Fahrzeug 100 bei Abzweigungen der Spur 116 entweder links oder rechts weiterfahren zu lassen. Dabei können im Navigationsbereich mehrere Codes vorhanden sein, wobei ein bestimmter Code ein- oder mehrmals vorhanden sein kann. Ein Code, der nur einmal vorhanden ist (der also eindeutig ist), kann zur Initialisierung der Position des Fahrzeugs 100 verwendet werden. Ein Code, der mehrmals vorhanden ist (der also nicht eindeutig ist), kann zur Lokalisierung verwendet werden; dabei wird ausgenutzt, dass das Fahrzeug 100 eine Schätzung seiner Position kennt, und damit bei weiter auseinanderliegenden gleichen Codes trotz der Mehrdeutigkeit aus dem Code Positionsinformationen gewinnen kann.

Das Fahrzeug 100 enthält mindestens einen Code-Leser 110, sowie mindestens einen Spursensor 108. In Fig. 1 ist ein Fahrzeug mit einem Code-Leser 110 und zwei Spursensoren 108 dargestellt. Die Spursensoren 108 können beispielsweise als Liniensensoren, die eine Ausdehnung im Wesentlichen senkrecht zur gewöhnlichen Fortbewegungsrichtung des Fahrzeugs 100 haben, ausgestaltet sein.

Der Code 114 kann beispielsweise Informationen darüber enthalten, ob das Fahrzeug 100 bei einer Verzweigung dem linken Pfad oder dem rechten Pfad folgen soll. Ebenso kann der Code 114 beispielsweise Geschwindigkeitsvorgaben für das Fahrzeug 100 enthalten.

Punkte 112 illustrieren, an welchen Stellen der Spursensoren 108 Spuren erkannt werden. Basierend auf einer aktuell geschätzten Position kann das Fahrzeug 100 ermitteln, zu welchen Teilen 118 der Spur 116 die Punkte 112 gehören. Beim in FIG. 1 dargestellten Beispiel sind die Teile 118 der Spuren 116 in der Karte weiter links als die erkannten Punkte 112. Das Fahrzeug 100 befindet sich also tatsächlich weiter rechts (bezogen auf die Fahrtrichtung) als geschätzt. Dies kann nach Auswertung der Spursensoren 108 korrigiert werden.

Das Fahrzeug 100 enthält ferner Abstandssensoren 120. Obwohl in Fig. 1 Abstandssensoren nur an der Vorderseite und der Rückseite des Fahrzeugs 100 dargestellt sind, können Abstandssensoren 120 an jeder beliebigen Seite und an ein oder mehreren Seiten des Fahrzeugs 100 angebracht sein.

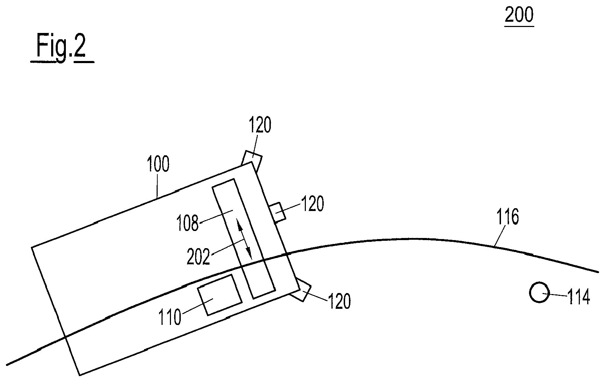

FIG. 2 zeigt eine schematische Darstellung 200 einer Spurführung mit gleichzeitigem Auslesen des Steuercodes 114 gemäß einer Ausführungsform. Wie durch Doppelpfeil 202 dargestellt, kann eine Abweichung des Fahrzeugs 100 von der Mitte der Spur 116 ermittelt werden, und das Fahrzeug 100 kann durch geeignete Steuerbefehle an den Antrieb auf der Spur 116 gehalten werden.

In einer Ausgestaltung des erfindungsgemäßen Kartierungsverfahrens wird bei der Inbetriebnahme des Systems zunächst der Fahrweg des FTF (beispielsweise des Fahrzeugs 100) durch das Anbringen von Spuren und Codes auf dem Boden der Anlage definiert. Danach erfolgt eine Kartierung der Anlange zusammen mit den ausgelegten Spuren und Codes. Nach der Kartierung können Teile der Spur oder auch die komplette Spur wieder entfernt werden, ohne dass eine Lokalisierung des Fahrzeugs dadurch unmöglich werden würde.

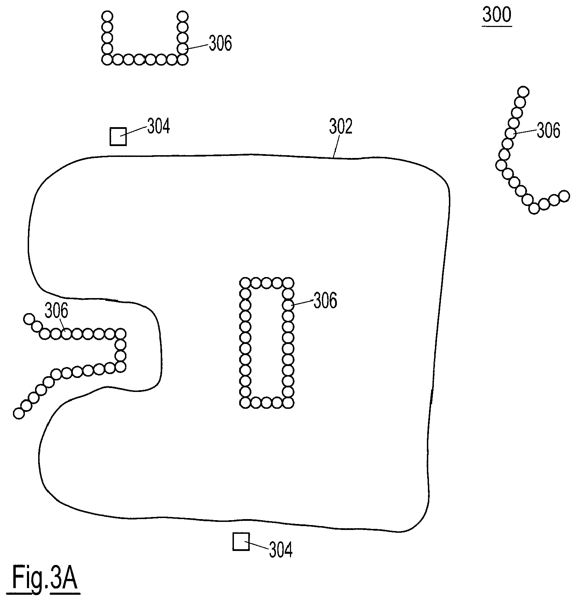

Vor dem eigentlichen Betrieb wird dazu eine Karte der Produktionsanlage erstellt. Dazu wird das FTF einmalig auf dem vorgesehenen Parcours betrieben und dabei die Messwerte der Fahrzeug-Sensorik, insbesondere der Abstandssensoren 120 (beispielsweise Laserscanner), Spurführungssensoren 108 und Code-Leser 110 oder Code-Sensor aufgezeichnet. Aus den aufgezeichneten Messwerten wird dann eine Karte der Anlage erzeugt, wie sie beispielhaft in Fig. 3A dargestellt ist.

Fig. 3A zeigt eine beispielhafte Karte 300 gemäß einer Ausführungsform. Die Karte 300, die auch als topographische Karte bezeichnet werden kann, besteht aus Konturen 306 der Umgebung aus Sicht der Laserscanner 120, der vorhandenen Spur 302 und den neben der Spur 302 angebrachten Markierungen 304, also den neben der Spur 302 angebrachten Codes. Die erzeugte Karte 300 kann auf mehrere Fahrzeuge 100 verteilt oder kopiert werden.

Der Kartierungsprozess kann automatisiert erfolgen. Die generierte Karte 300 wird dabei auf Plausibilität überprüft. Dazu kann beispielsweise geprüft werden, ob die Spur 302 durch Konturen 306 verläuft, was physikalisch nicht möglich ist. Solche Inplausibilitäten können dem Benutzer angezeigt werden, und die Kartierung kann verworfen und eine neue Kartierung gestartet werden.

Während der Aufnahme-Fahrt (also der Fahrt zur Kartierung) wird die Eigenbewegung des Fahrzeugs 100 basierend auf den Abstandmessungen, beispielsweise des Laserscanners, und/ oder der Odometrie, beispielsweise über die Radgeschwindigkeiten, geschätzt, und die Abstandsdaten (beispielsweise die Laserdaten), Codedaten und Spurdaten werden vorverarbeitet und gespeichert.

Die geschätzte Eigenbewegung kann für das Anordnen der Daten (also der Abstandsdaten, der Codedaten und der Spurdaten) in einer Karte genutzt werden. Hierbei können jedoch Fehler auftreten, die sich über die Zeit aufsummieren und immer größer werden können, was zu inkonsistenten Karten führen kann.

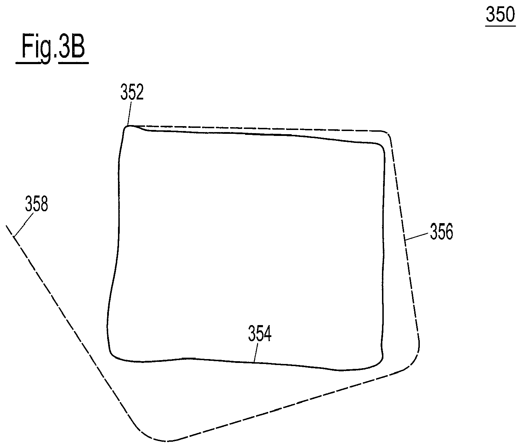

Fig. 3B zeigt eine Illustration 350 eines solchen Fehlers. Ein Fahrzeug kann an Startposition 352 starten und eine vorgegebenen Bahn 354 abfahren. Nachdem die Bahn 354 abgefahren wurde, befindet sich das Fahrzeug wieder an der Startposition 352. Durch Fehler in der geschätzten Position, die sich aufaddieren können, schätzt das Fahrzeug jedoch, dass es die gestrichelt dargestellte Bahn 356 abfährt, und sich nach dem tatsächlichen Abfahren der Bahn 354 nicht an der Stelle der Startposition 352, sondern an einer geschätzten Position 358 befindet, die von der Startposition 352 abweicht. Wenn das Fahrzeug nun aber weiß, dass es an der Stelle, an der es seine Position als Position 358 schätzt, tatsächlich an Position 352 ist, kann diese Abweichung (also dieser Fehler) korrigiert werden.

Um diesen Fehler zu korrigieren werden sogenannte Loop-Closures verwendet, also Stellen, an denen das Fahrzeug eine bereits besuchte Position erneut überfährt. Diese Loop-Closures können beispielsweise basierend auf den gelesenen eindeutigen Codes bestimmt werden, da die eindeutigen Codes genau solche Informationen (Position bereits bekannt) beinhalten.

Z.B. mittels Graph-basierter Optimierung (beispielsweise mittels des Frameworks g²o) werden die Loop-Closures benutzt, um den Fehler in der geschätzten Eigenbewegung zu korrigieren.

Es können jedoch auch andere Optimierungs- oder Filterverfahren verwendet werden.

Um die Karte weiter zu verbessern, werden die observierten Spuren nicht nur in die Karte eingetragen, sondern auch algorithmisch verwendet. In der Graphbasierten Optimierung wird hierfür eine zusätzliche Bedingung integriert, dass mehrfach observierte Spuren (dies kann aus mehrmaligem Besuchen derselben Position, wie auch durch die Verwendung multipler Spurführungssensoren zustande kommen) aufeinander gezogen werden. In einem weiteren Schritt werden diese mehrfach vorhandenen Spuren dann zu einer einzelnen Spur vereint.

Auch die gelesenen Codes werden anhand der geschätzten Fahrzeugpositionen in die Karte eingetragen und - falls mehrfach observiert - vereinigt.

Zur Lokalisierung des Fahrzeugs kann basierend auf der wie oben beschrieben ermittelten Karte mittels der Sensorik des FTF (beispielsweise mittels des Abstandsensors, des Spursensors, und des Code-Lesers) im laufenden Betrieb die Pose des Fahrzeuges bezüglich des kartierten Parcours ermittelt werden.

Dazu werden gemäß einer Ausführungsform die Messwerte der folgenden Sensoren verwendet: Abstandssensor (beispielsweise Laserscanner), Odometrie des Fahrzeuges (beispielsweise Radencoder und Lenkwinkel), Code-Leser und Spursensoren. Auf externe Lokalisierungssysteme kann verzichtet werden und nur Sensorik verwendet werden, die auf dem Fahrzeug angebracht ist. Bei einem solchen System ist es also möglich, ohne Modifikation der Anlage, in der das Fahrzeug fahren soll, insbesondere ohne Einrichten von externen Sensoren, auszukommen.

Zur Berechnung der Fahrzeugpose kann ein Unscented Kalman Filter (UKF) verwendet werden. Dieser schätzt die Wahrscheinlichkeitsverteilung der Pose des Fahrzeuges unter der Annahme, dass diese normalverteilt ist. Der UKF ermöglicht es, die Unsicherheiten der Messwerte der verschiedenen Sensoren zu berücksichtigen, was die Genauigkeit und Robustheit der Posenschätzung erhöht. Zur Schätzung der Pose kann ein Lokalisierungsverfahren gemäß einer Ausführungsform der Erfindung in zwei Zyklen (oder Schritten) arbeiten: Prädiktion und Korrektur. Im Folgenden werden diese genauer beschrieben und es wird dargestellt, wie die Sensormesswerte durch das Verfahren verwendet werden.

Im Schritt der Prädiktion wird die Pose des Fahrzeuges zum nächsten Zeitschritt vorausberechnet. Dies geschieht auf Basis eines Scan-Matchers, der den aktuellen Laserscan mit einem zuvor gemessenen Keyframe vergleicht. Das Resultat des Scan-Matchers ist die Posenänderung bezüglich des Keyframes zusammen mit dessen Unsicherheit, die als Kovarianz modelliert werden kann. Sobald der Großteil des Keyframes außerhalb des Sichtbereichs der Laserscanner gerät, wird der aktuelle Laserscan als neues Keyframe gespeichert.

Um die Information des Scan-Matchers innerhalb des UKF verwenden zu können, wird der Zustand des Fahrzeuges als dessen globale Pose zusammen mit der globalen Pose des Keyframes definiert. Solange der Scan-Matcher kein neues Keyframe wählt, wird dessen Information verwendet, um die Pose des Fahrzeuges vorauszuberechnen. Die Unsicherheit der Fahrzeugpose setzt sich daher aus der geschätzten Unsicherheit der Pose des letzten Keyframes und der Unsicherheit der aktuell berechneten Posenänderung zum Keyframe zusammen. Sobald sich das Keyframe des Scanmatchers ändert, wird die aktuelle globale Pose des Fahrzeuges als die Pose des neuen Keyframes gesetzt.

Die Prädiktion gemäß einer Ausführungsform erlaubt eine drift-freie Vorhersage, solange sich das Keyframe nicht ändert. Sobald sich das Keyframe ändert, wird dessen globale Unsicherheit korrekt beschrieben.

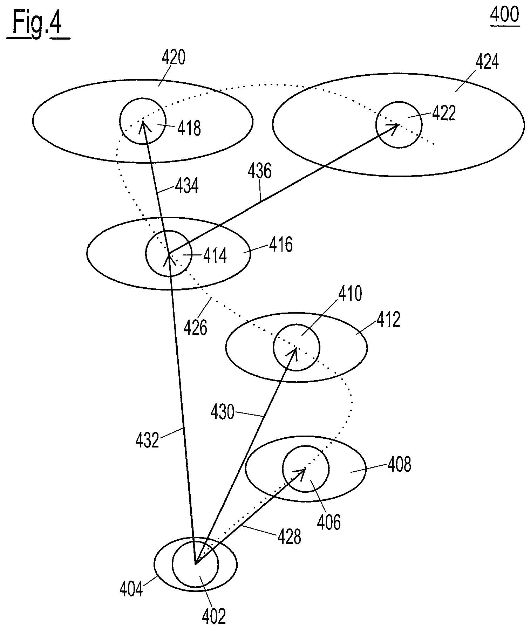

Fig. 4 zeigt eine schematische Darstellung 400 der Prädiktion gemäß einer Ausführungsform. Geschätzte Fahrzeugposen sind dabei jeweils als Kreis mit Orientierung und Unsicherheiten der Schätzung als Ellipsen um diesen Kreis dargestellt. Eine größere Ellipse bedeutet dabei eine größere Unsicherheit. An einer ersten geschätzten Pose 402 mit Unsicherheit 404 wird die geschätzte Pose 402 als Keyframe gesetzt. Die nächste geschätzte Pose 406 weist bereits eine größere Unsicherheit 408 auf. Die darauf folgend geschätzte Pose 410 weist eine wiederum vergrößerte Unsicherheit 412 auf. In der nächsten Pose 414 mit Unsicherheit 416 wird der Keyframe neu gesetzt, weil der vorherige Keyframe (also der Keyframe aus Pose 402) außerhalb des Sichtbereichs des Laserscanners ist. Die folgend geschätzte Pose 418 weist wiederum eine erhöhte Unsicherheit 420 auf. In der nächsten Pose 422 mit Unsicherheit 424 wird der Keyframe neu gesetzt, weil der vorherige Keyframe (also der Keyframe aus Pose 414) außerhalb des Sichtbereichs des Laserscanners ist. Basierend auf den geschätzten Posen kann eine geschätzte Bahn 426 ermittelt werden. Dabei sind in Fig. 4 nur beispielhafte Posen und Unsicherheiten dargestellt. Die tatsächliche Dichte von Posen entlang der Bahn 426 kann höher sein als in Fig. 4 dargestellt. Fig. 4 zeigt ferner die Verbindungslinien 428, 430, 432, 434, 436 der jeweils aktuellen Pose zum jeweils aktuellen Keyframe.

Während in Fig. 4 beispielhaft dargestellt ist, dass sich die Unsicherheit von Pose zu Pose erhöht, muss sich die Unsicherheit nicht generell von Pose zu Pose zwangsläufig erhöhen, wenn kein neuer Keyframe gesetzt wird. Beispielsweise könnte die Unsicherheit 412 kleiner sein als die Unsicherheit 408, aber nicht kleiner als die Unsicherheit 404. Um wieviel größer die Unsicherheit im Vergleich zum Keyframe ist, hängt nur von dem Ergebnis des Scanmatchers dieses konkreten Scans gegen den Keyframe ab. Der darauffolgende Scan kann besser passen als der vorherige, so dass die Unsicherheit nicht zunimmt oder sich sogar verringern kann.

Im Schritt der Korrektur wird die erstellte Vorhersage (aus dem Schritt der Prädiktion) anhand von Sensordaten korrigiert. Dazu können beispielsweise die folgenden Sensorinformationen verwendet: kartierte Objektabstände (in anderen Worten: Referenz-Scans), kartierte Spuren, und/ oder kartierte Codes.

Bei der Korrektur mittels Referenz-Scans (also beim Vergleich zu Referenz-Scans) wird ein Scan-Matcher verwendet, um den aktuellen Scan mit den Referenz-Scans zu vergleichen, die zuvor durch den Kartierungsvorgang in einer Karte gespeichert wurden. Die Referenz-Scans bestehen aus der Pose, an der der Scan aufgezeichnet wurde, deren Unsicherheit, sowie dem Scan (also den Abstandsinformationen, beispielsweise den in Fig. 3 dargestellten Konturen 306) selbst. Bei diesem Schritt können erkannte Reflektoren, die in der Umgebung angebracht sind, höher gewichtet werden als Konturen mit normaler Remission. Konturen mit normaler Remission ergeben sich aus "natürlichen" Objekten, die im Navigationsbereich vorhanden sind, wie beispielsweise Gebäude, Regale, Wände und dergleichen, während Reflektoren im Navigationsbereich alleine für eine bessere Lokalisierung angebracht sein können. Dies kann die Robustheit des Systems erhöhen, da Reflektoren eine sichere Assoziation zwischen kartierter Struktur und aufgenommenem Scan ermöglichen.

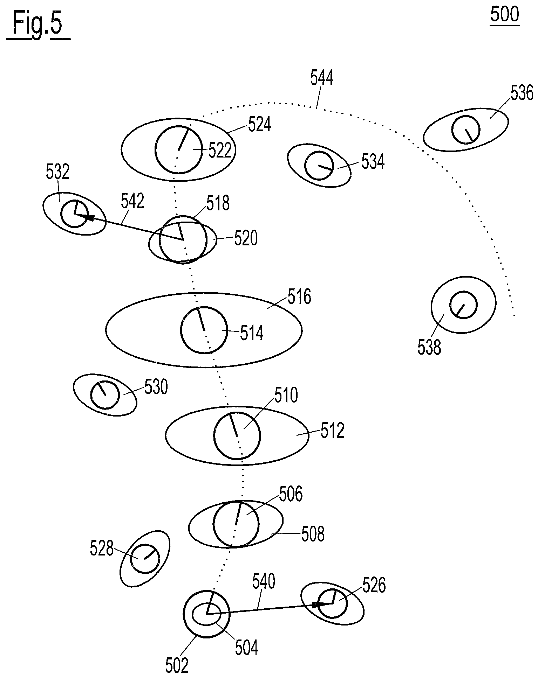

Fig. 5 zeigt eine schematische Darstellung 500 der Korrektur gemäß einer Ausführungsform. Eine Mehrzahl von Posen 526, 528, 530, 532, 534, 536, 538 an denen Referenzscans erstellt und kartiert wurden, können zur Korrektur eines entlang einer Bahn 544 fahrenden Fahrzeugs verwendet werden. Sobald eine Korrektur mittels eines kartierten Referenzscans erfolgt, wird die Unsicherheit der geschätzten Fahrzeugpose geringer. An einer ersten dargestellten geschätzten Pose 502 ist die Unsicherheit 504 gering, da hier mittels Referenzscan 526 korrigiert wird, wie durch Pfeil 540 dargestellt. Unsicherheiten sind in Fig. 5 ähnlich wie in Fig. 4 durch Ellipsen um die Posen dargestellt. An einer nächsten Pose 506 ist die Unsicherheit 508 bereits größer. In den folgenden Posen 510, 514 nimmt die Unsicherheit 512, 514 weiter zu. An Pose 518 wird - wie durch Pfeil 542 dargestellt - mittels Referenzscan 532 die Pose korrigiert, sodass die Unsicherheit 520 reduziert wird. Die Unsicherheit 524 der folgenden Schätzung der Pose 522 ist dann wieder erhöht.

Dabei muss nicht nach jedem Prädiktionsschritt ein Korrekturschritt erfolgen, sondern es können mehrere Prädiktionsschritte erfolgen, bevor ein Korrekturschritt ausgeführt wird. Ferner kann vermieden werden, dass zu oft (beispielsweise zu oft hintereinander oder zu oft innerhalb eines vorgegebenen Zeitraum) mittels des gleichen Referenzscans korrigiert wird, um einen Fehler in der Bewertung der Unsicherheit (im Sinne einer Overconfidentiality, deutsch: Selbstüberschätzung) zu vermeiden.

Ferner kann eine Korrektur verworfen werden, wenn die Korrektur unplausibel erscheint, beispielsweise, weil eine zu große Korrektur vorgenommen werden müsste.

Gemäß einer Ausführungsform muss nicht zwangsläufig der örtlich nächstgelegene Referenzscan für die Korrektur verwendet werden. Beispielsweise ist in Fig. 5 gezeigt, dass Referenzscan 526 zur Korrektur verwendet wird, obwohl Referenzscan 528 näher an der geschätzten Pose 502 liegt. Ursache kann sein, dass Referenzscan 528 bereits zuvor verwendet wurde, oder dass eine Korrektur basierend auf Referenzscan 528 unplausibel erscheint, oder dass Referenzscan 528 durch eine Mauer oder ein anderes Hindernis von der geschätzten Pose 502 getrennt ist.

Bei der Korrektur mittels Referenzscans kann mit einer Grid-Map verglichen (d.h. gegen eine Grid-Map gematcht) werden. Für die Korrektur mittels Referenzscans kann das gleiche Scanmatching-Prinzip wie für die inkrementelle Bewegungschätzung verwendet werden. Alternativ können andere Verfahren zur Korrektur eingesetzt werden.

Bei der Korrektur mittels kartierter Spuren (also beim Vergleich mit kartierten Spuren) werden die Messungen der Liniensensoren genutzt, wenn das Fahrzeug auf einer Spur fährt, die zuvor kartiert wurde, um die Fahrzeugpose zu korrigieren. Dazu werden die Liniensegmente der gesamten kartierten Spur ausgewählt, die zu den Messungen der Spur am ehesten korrespondieren (beispielsweise die Teile 118 der Spur 116 wie in Fig. 1 gezeigt). Über den Korrekturschritt wird die geschätzte Pose des Fahrzeuges so verändert, dass der Abstand der wirklichen Spurmessung zu den kartierten Spursegmenten minimal wird.

Diese zusätzlichen Informationen der Spurmessung erhöhen die Genauigkeit der Lokalisierung sowie deren Robustheit. Solange eine Spur vorhanden ist (also die Spur nicht beispielsweise abgerissen ist oder gezielt entfernt wurde), steht eine bessere Posenschätzung zur Verfügung.

Bei der Korrektur mittels kartierter Codes (also beim Vergleich mit kartierten Codes) wird, wenn durch den Code-Leser ein kartierter Code erkannt wird, diese Information zur Posenschätzung verwendet. Dazu wird durch die Korrektur die Differenz der absoluten Position des Code-Lesers zu der Position des Codes in der Karte minimiert. Weiterhin werden durch erkannte Codes Fehler in der Lokalisierung erkannt, sollte der Code laut Karte zu weit vom Fahrzeug entfernt sein.

Beispielsweise können wie in Fig. 1 dargestellt über die Punkte 112 der Spurmessungen der Liniensensoren die Liniensegmente 118 als zur Korrektur geeignete Stücke der Spurkarte (also der kartierten Spuren in der Karte) ausgewählt werden. Ebenso kann der Abstand eines erkannten Codes 14 vom Code-Leser 110 zur Korrektur der geschätzten Pose verwendet werden.

Zur Initialisierung wird gemäß einer Ausführungsform das Fahrzeug über einen kartierten Code gefahren. An jedem Code ist ein Referenz-Scan verfügbar, was durch den Kartierungsprozess sichergestellt werden kann. Mittels des aktuellen Scans des Laserscanners wird die globale Pose des Fahrzeuges über einen Scan-Matching Schritt berechnet. Die Konvergenz wird sichergestellt, da bekannt ist, in welcher Richtung das Fahrzeug über den Code fährt. Dies führt zu einer sehr robusten und genauen Initialisierung.

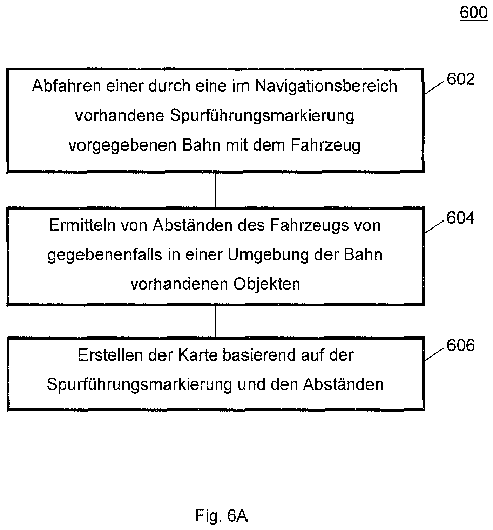

Fig. 6A zeigt ein Flussdiagramm 600 zur Veranschaulichung eines Verfahrens zum Erstellen einer Karte eines Navigationsbereichs eines Fahrzeugs gemäß einer Ausführungsform. In 602 kann mit dem Fahrzeug eine durch eine im Navigationsbereich vorhandene Spurführungsmarkierung vorgegebenen Bahn abgefahren werden. In 604 können Abstände des Fahrzeugs von gegebenenfalls in einer Umgebung der Bahn vorhandenen Objekten ermittelt werden. In 606 kann die Karte basierend auf der Spurführungsmarkierung und den Abständen erstellt werden.

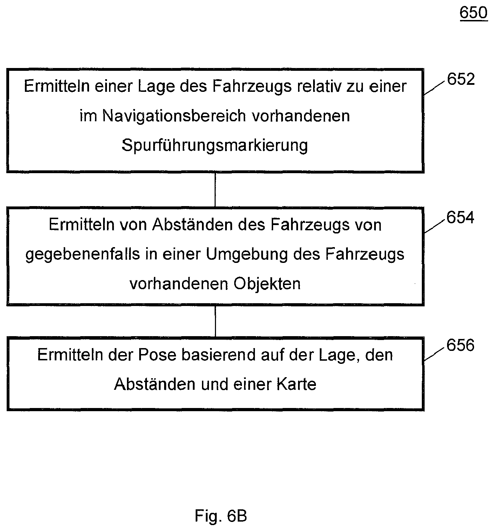

Fig. 6B zeigt ein Flussdiagramm 650 zur Veranschaulichung eines Verfahrens zum Ermitteln einer Pose eines Fahrzeugs in einem Navigationsbereich gemäß einer Ausführungsform. In 652 kann eine Lage des Fahrzeugs relativ zu einer im Navigationsbereich vorhandenen Spurführungsmarkierung ermittelt werden. In 654 können Abstände des Fahrzeugs von gegebenenfalls in einer Umgebung des Fahrzeugs vorhandenen Objekten ermittelt werden. In 656 kann die Pose basierend auf der Lage, den Abständen und einer Karte ermittelt werden, wobei die Karte Positionsinformationen von im Navigationsbereich vorhandenen Objekten und Spurführungsmarkierungen aufweist.

An Stellen, die z.B. problematisch für eine Laserlokalisierung sind, kann die Robustheit der Verfahren und Vorrichtungen wie folgt erhöht werden: Es können Reflektoren verwendet werden; das System kann parallel zu einer konventionellen Spurführung verwendet werden; vorhandene Spuren und Codes können die Robustheit und Genauigkeit des Systems erhöhen, so dass dies an Stellen, an denen die Spuren und Codes nicht mehr vorhanden sind, eine gesteigerte Verfügbarkeit aufweist.

**Bezugszeichenliste**

| | |
|---|---|
| 100 | Fahrzeug |
| 102 | Rad |
| 106 | Ausschnitt des Fahrzeugs |
| 108 | Spursensor |
| 110 | Code-Leser |
| 112 | Punkt, an dem eine Spur erkannt wurde |
| 114 | Code |
| 116 | Spurführungsmarkierung |
| 118 | Teile der Spur |
| 120 | Abstandssensor |
| 122 | gewöhnliche Fahrtrichtung des Fahrzeuges |
| | |
| 200 | schematische Darstellung einer Spurführung |
| 202 | Abweichung |
| | |
| 300 | Karte |
| 302 | Spur |
| 304 | Markierungen |
| 306 | Konturen |
| 350 | Illustration eines Lokalisierungsfehlers |
| 352 | Startposition |
| 354 | tatsächlich abgefahrene Bahn |
| 356 | Schätzung der abgefahrenen Bahn |
| 358 | geschätzte Position |
| | |
| 400 | Darstellung der Prädiktion gemäß einer Ausführungsform |
| 500 | Darstellung der Korrektur gemäß einer anderen Ausführungsform |
| 402, 406, 410, 414, 418, 422, 502, 506, 510, 514, 518, 522 | geschätzte Pose |
| 404, 408, 412, 416, 420, 424, 504, 508, 512, 516, 520, 524 | Unsicherheit |
| 426 | geschätzte Bahn |
| 428, 430, 432, 434, 436 | Verbindungslinie |
| 526, 528, 530, 532, 534, 536, 538 | Pose, an der ein Referenzscan erstellt und kartiert wurde |
| 540, 542 | Korrektur |
| 544 | Bahn |
| | |
| 600 | Flussdiagramm eines Verfahrens zum Erstellen einer Karte |
| 650 | Flussdiagramm eines Verfahrens zur Ermittlung einer Pose eines Fahrzeugs |
| 602, 604, 606, 652, 654, 656 | Verfahrensschritt |

## Patentansprüche

1. Verfahren zum Erstellen einer Karte (300) eines Navigationsbereichs eines Fahrzeugs (100), das Verfahren aufweisend:
- Abfahren (602) einer durch eine im Navigationsbereich vorhandene Spurführungsmarkierung (114, 116) vorgegebenen Bahn mit dem Fahrzeug (100);
- Ermitteln (604) von Abständen des Fahrzeugs (100) von gegebenenfalls in einer Umgebung der Bahn vorhandenen Objekten; und
- Erstellen (606) der Karte (300) basierend auf der Spurführungsmarkierung (114, 116) und den Abständen.

2. Verfahren nach einem der Ansprüche 1, ferner aufweisend:
Ermitteln zumindest einer geschätzten Position des Fahrzeugs (100) basierend auf einer geschätzten Eigenbewegung des Fahrzeugs (100).

3. Verfahren nach Anspruch 2,
wobei die Eigenbewegung basierend auf den Abständen und/oder basierend auf Messungen einer Geschwindigkeit mindestens eines Rades (102) des Fahrzeugs (100) geschätzt wird.

4. Verfahren nach einem der Ansprüche 2 oder 3,
wobei die Karte (300) ferner auf der geschätzten Position basiert.

5. Verfahren nach Anspruch 4,
wobei die Karte (300) für eine Mehrzahl von geschätzten Positionen aufweist:
Positionsinformation über Objekte (306) in einer Umgebung der geschätzten Position; und
Information über eine an der geschätzten Position vorhandenen Spurführungsmarkierung (302, 304).

6. Verfahren nach einem der Ansprüche 1 bis 5, ferner aufweisend:
Ermitteln, ob eine aktuelle tatsächliche Position des Fahrzeugs (100) entlang der Bahn einer bereits zuvor angefahrenen tatsächlichen Position des Fahrzeugs (100) entspricht; und
falls ermittelt wird, dass die aktuelle tatsächliche Position der bereits zuvor angefahrenen tatsächlichen Position entspricht, Durchführen einer Korrektur der Karte (300) zum Zusammenführen der an der aktuellen tatsächlichen Position des Fahrzeugs (100) ermittelten geschätzten Position und der an der bereits zuvor angefahrenen tatsächlichen Position des Fahrzeugs (100) ermittelten geschätzten Position.

7. Verfahren nach Anspruch 6,
wobei das Ermitteln, ob die tatsächliche aktuelle Position des Fahrzeugs (100) entlang der Bahn der bereits zuvor angefahrenen tatsächlichen Position des Fahrzeugs (100) entspricht, auf der Spurfolgemarkierung (114, 116) basiert und/oder auf den Abständen basiert.

8. Verfahren nach einem der Ansprüche 6 oder 7,
wobei die Korrektur basierend auf einem Graph-Optimierungs-Verfahren durchgeführt wird.

9. Verfahren nach Anspruch 8,
wobei in dem Graph-Optimierungsverfahren Knoten des Graphen Positionen entlang der vorgegebenen Bahn entsprechen und Kanten des Graphen den Abständen und der Spurführungsmarkierung (114, 116) entsprechen.

10. Verfahren nach einem der Ansprüche 1 bis 9,
wobei die Spurführungsmarkierung (114, 116) eindeutige Codes (114) mit bekannter eindeutiger Position in dem Navigationsbereich aufweist.

11. Verfahren zum Ermitteln einer Pose eines Fahrzeugs (100) in einem Navigationsbereich, das Verfahren aufweisend:
- Ermitteln (652) einer Lage des Fahrzeugs (100) relativ zu einer im Navigationsbereich vorhandenen Spurführungsmarkierung (114, 116);
- Ermitteln (654) von Abständen des Fahrzeugs (100) von gegebenenfalls in einer Umgebung des Fahrzeugs (100) vorhandenen Objekten; und
- Ermitteln (656) der Pose basierend auf der Lage, den Abständen und einer Karte (300), wobei die Karte (300) Positionsinformationen von im Navigationsbereich vorhandenen Objekten (306) und Spurführungsmarkierungen (302, 304) aufweist.

12. Verfahren nach Anspruch 11,
wobei die Pose basierend auf einem Kalman-Filter-Verfahren ermittelt wird,
wobei in dem Kalman-Filter-Verfahren vorzugsweise eine Position eines Keyframes geschätzt wird.

13. Kartierungsvorrichtung, aufweisend:
- eine Antriebsschnittstelle, eingerichtet zum Steuern eines Antriebs (102) eines Fahrzeugs (100);
- eine Abstandssensorschnittstelle, eingerichtet zum Empfangen eines mittels eines Abstandssensors (120) ermittelten Abstands des Abstandssensors (120) von gegebenenfalls in einer Umgebung des Abstandssensors (120) vorhandenen Objekten;
- eine Spurfolgesensorschnittstelle, eingerichtet zum Empfangen einer mittels eines Spurfolgesensors (108, 110) ermittelten Lage des Spurfolgesensors (108, 110) relativ zu einer in einem Navigationsbereich vorhandenen Spurführungsmarkierung (114, 116); und
- einen Steuerungsschaltkreis eingerichtet zum:
- Ansteuern des Antriebs (102) über die Antriebsschnittstelle so, dass das Fahrzeug (100) einer durch die Spurführungsmarkierung (114, 116) vorgegebenen Bahn folgt;
- Ermitteln von Abständen von gegebenenfalls in einer Umgebung des Abstandssensors (120) vorhandenen Objekten entlang der Bahn; und
- Erstellen einer Karte (300) des Navigationsbereichs basierend auf der Spurführungsmarkierung (114, 116) und den Abständen.

14. Lokalisierungsvorrichtung, aufweisend:
- eine Abstandssensorschnittstelle, eingerichtet zum Empfangen eines mittels eines Abstandssensors (120) eines Fahrzeugs (100) ermittelten Abstands des Abstandssensors (120) von gegebenenfalls in einer Umgebung des Abstandssensors (120) vorhandenen Objekten;
- eine Spurfolgesensorschnittstelle, eingerichtet zum Empfangen einer mittels eines Spurfolgesensors (108, 110) des Fahrzeugs (100) ermittelten Lage des Spurfolgesensors (108, 110) relativ zu einer in einem Navigationsbereich vorhandenen Spurführungsmarkierung (114, 116); und
- einen Steuerungsschaltkreis eingerichtet zum:
- Ermitteln einer Lage des Fahrzeugs (100) relativ zu der vorhandenen Spurführungsmarkierung (114, 116);
- Ermitteln von Abständen des Fahrzeugs (100) von gegebenenfalls in einer Umgebung des Fahrzeugs (100) vorhandenen Objekten; und
- Ermitteln einer Pose des Fahrzeugs (100) basierend auf der Lage, den Abständen und einer Karte (300), wobei die Karte (300) Positionsinformationen von im Navigationsbereich vorhandenen Objekten (306) und Spurführungsmarkierungen (302, 304) aufweist.

15. Fahrzeug (100), insbesondere fahrerloses Fahrzeug, mit einer Lokalisierungsvorrichtung nach Anspruch 14, deren Signale zur Steuerung des Fahrzeugs (100) eingesetzt werden.
